# EUROPEAN PATENT APPLICATION

(11) **EP 4 697 609 A1**
(43) Date of publication of application: **18.02.2026**
(21) Application number: 24194348.9
(22) Date of filing: 13.08.2024
(51) Int. Cl.: H04B 1/3883

(54) **COMMUNICATION APPARATUS AND OPERATION METHOD**

(71) Applicant: Bittium Wireless Oy, 90590 Oulu (FI)
(72) Inventor: Piironen, Timo, 90590 Oulu (FI); Paldan, Janne, 90590 Oulu (FI); Miettunen, Jukka, 90590 Oulu (FI); Korhonen, Jouko, 90590 Oulu (FI); Keränen, Timo, 90590 Oulu (FI)
(74) Representative: Kolster Oy Ab

(57) **Abstract**

A communication apparatus (100) comprises a handheld communication unit (106), which is in electric contact with a capacitive electric energy storage (102). The handheld communication unit (106) has a wireless connection to a network (150) of a radio system. The capacitive electric energy storage (102), which comprises a capacitor (302) with charge capacity required for an interval of operation of the handheld communication unit (106), is in an electric contact with a source adapter (104) and/or a battery (112) of the handheld communication unit (106) temporarily in a repeated manner. The source adapter (104) and/or the capacitive electric energy storage (102) comprises a connector wire (108) which comprises a connector (110) for repeated connection with different external electric power sources (114(1) to 114(N)) and the battery (112). The capacitive electric energy storage (102) charges in response to the electric connection with said power sources (114(1) to 114(N)) through the source adapter (104), or in response to the electric connection with the electric connection with the battery (112). The capacitive energy storage (102) supplies electric power to the handheld communication unit (106) for the interval of operation in response to a loss of electric power from the external power sources (114(1) to 1148(N)) and the battery (112). The handheld communication unit (106) retains memory and clock functions and reserve connection to the network (150) of the radio system during said interval based on electric power supply from the capacitive energy storage (102).

## Description

### Field

The invention relates to a communication apparatus and an operation method.

### Background

A handheld radio communication device such as or similar to a tactical software-defined radio that can be used by police, firefighters in addition to combat teams and other military personnel must be reliably and continuously usable in all situations. An electric power source of the handheld radio communication device may be its own battery, a battery of a vehicle or some other external power source. A swap between electric power sources may switch off the handheld radio communication device. To turn the handheld communication device fully on again may take time, which is not desired particularly in emergency situations. The switching off can be overcome such the handheld communication device is kept continuously in electric connection with a tactical power pack that has hot swap batteries which can provide uninterruptable electric power feed to the handheld communication device. However, ordinary external electric power sources such as those of motorized vehicles cannot then be utilized. Additionally, a fully charged swappable battery must always be carried with the handheld communication device. However, there are situations where it may be desirable to carry something else instead of the swappable battery.

### Brief description

The present invention seeks to provide an improvement in operation requiring a plurality of electric power sources at different moments.

The invention is defined by the independent claims. Embodiments are defined in the dependent claims.

If one or more of the embodiments is considered not to fall under the scope of the independent claims, such an embodiment is or such embodiments are still useful for understanding features of the invention.

### List of drawings

Example embodiments of the present invention are described below, by way of example only, with reference to the accompanying drawings, in which
Figure 1 illustrates an example where a capacitive electric energy storage receives electric power from a battery of a handheld communication unit through a source adapter;
Figure 2 illustrates an example where the capacitive electric energy storage receives electric power from one of external electric power sources through the source adapter;
Figure 3 illustrates an example where the capacitive electric energy storage receives electric power directly from a battery of the handheld communication unit;
Figure 4 illustrates an example where the capacitive electric energy storage feeds energy to the handheld communication unit during a swap of electric power sources;
Figure 5 illustrates an example of the capacitive electric energy storage;
Figure 6 illustrates an example of the attachment of the capacitive electric energy storage and the handheld communication unit;
Figure 7 illustrates an example of the attachment of the capacitive electric energy storage, the handheld communication unit and a source adapter;
Figure 8 illustrates an example of the handheld communication unit;
Figure 9 illustrates of an example of a flow chart of an operation method.

### Description of embodiments

The following embodiments are only examples. Although the specification may refer to "an" embodiment in several locations, this does not necessarily mean that each such reference is to the same embodiment(s), or that the feature only applies to a single embodiment.

The articles "a" and "an" give a general sense of entities, structures, components, compositions, operations, functions, connections or the like in this document. Note also that singular terms may include pluralities.

Single features of different embodiments may also be combined to provide other embodiments. Furthermore, words "comprising" and "including" should be understood as not limiting the described embodiments to consist of only those features that have been mentioned and such embodiments may also contain features/structures that have not been specifically mentioned. All combinations of the embodiments are considered possible if their combination does not lead to structural or logical contradiction.

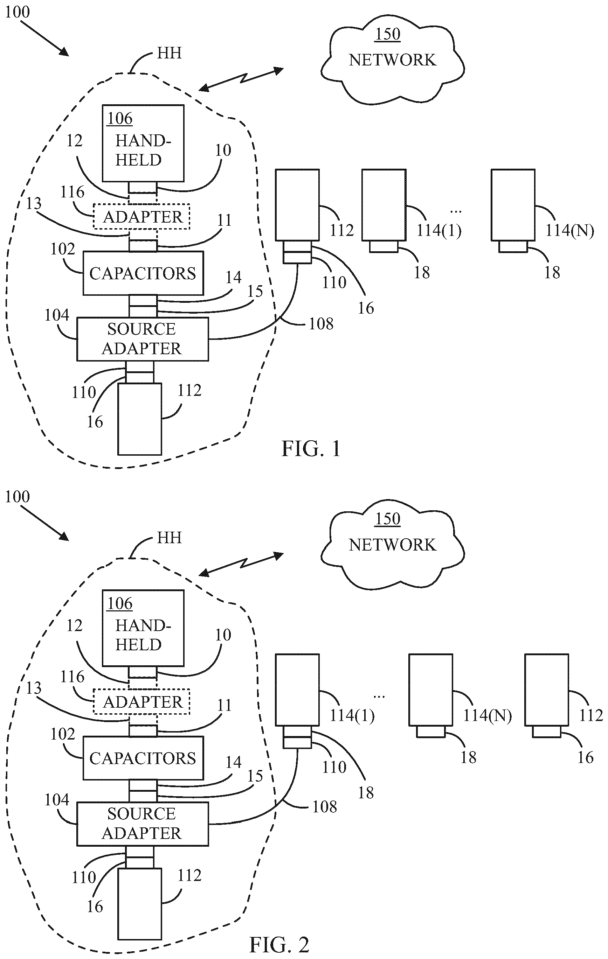

Figs 1 to 3 illustrate examples of a block diagram of a communication apparatus 100. The combination of a handheld communication unit 106, potential adapter 116, a capacitive electric energy storage 102 and a source adapter 104 is a handheld and/or portable device HH. The capacitive electric energy storage 102 may include the adapter 116, and thus such a separate adapter 116 may not needed.

Fig.1 illustrates an example where the capacitive electric energy storage 102 receives electric power from a battery 112 of a handheld communication unit 106 through a source adapter 104. The battery 112 may be in contact with the source adapter 104 directly through connectors 16 and 110 or through a connector wire 108. The two batteries 112 may be swappable batteries and potentially hot swap batteries. Each of the batteries 112 may have a wired coupling with the source adapter 104 or direct connector coupling with the source adapter 104.

Fig. 2 illustrates an example where the capacitive electric energy storage 102 receives electric power from one of external electric power sources 114(1) to 114(N) through the source adapter 104. In Figs 1 to 2, the connector 14 of the capacitive electric energy storage 102 is connected with the connector 15 of the source adapter 104. The external electric power sources 114(1) to 114(N) may have a wired coupling with the source adapter 104 or a direct connector coupling with the source adapter 104.

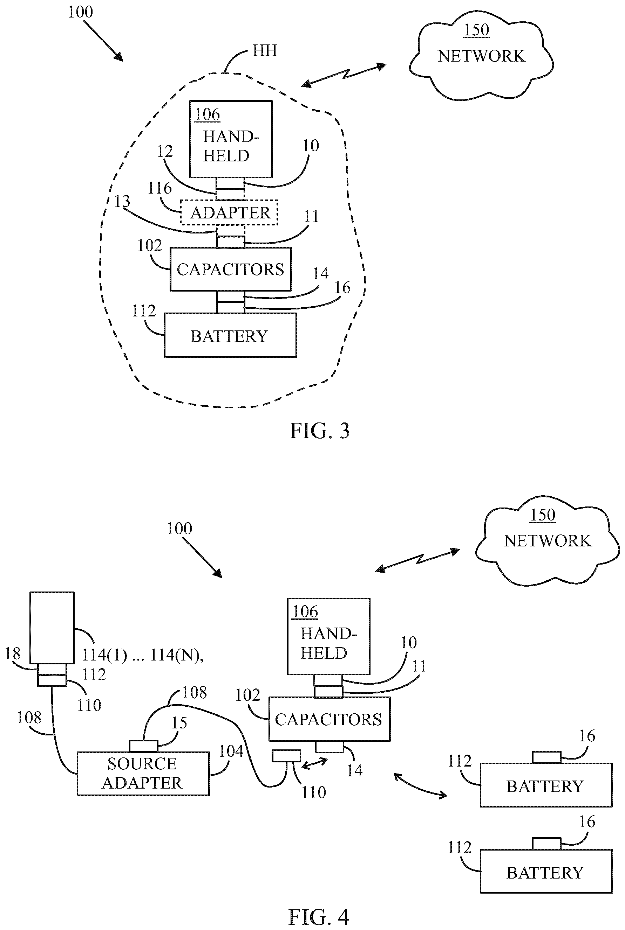

Fig. 3 illustrates an example where the capacitive electric energy storage 102 receives electric power directly from a battery 112 of the handheld communication unit 106. In Fig. 3, the connector 14 of the capacitive electric energy storage 102 is directly connected with the connector 16 of the battery 112. The combination of a handheld communication unit 106, a potential adapter 116, a capacitive electric energy storage 102 and a battery 112 of the handheld communication unit 106 is a handheld and/or portable device HH. In an embodiment, the capacitive electric energy storage 102 may have a wired connection with the connector 16 of the battery 112.

The communication unit 100 may comprise an adapter 116 between the handheld communication unit 106 and the capacitive electric energy storage 102. However, the adapter 116 is optional and it is not needed if the connector 10 or the handheld communication unit 106 and the connector 11 of the capacitive electric energy storage 102 are made to match each other. The adapter 116 may connect with the handheld communication unit 106 and the capacitive electric energy storage 102 using a bayonet connection mechanism or the like.

As shown in Figs 1 to 3, the handheld communication unit 106 may be directly connected with the capacitive electric energy storage 102 or through the adapter 116. In an embodiment, where a mechanical and electrical connector 10 of the handheld communication unit 106 and a mechanical and electrical connector 11 of the capacitive electric energy storage 102 match together, the adapter 116 is not needed. In an embodiment, where the mechanical and electrical connector 10 of the handheld communication unit 106 and the mechanical and electrical connector 11 of the capacitive electric energy storage 102 do not match together, the mechanical and electrical connector 10 of the handheld communication unit 106 is connected with a mechanical and electrical connector 12 of the adapter 116, and the mechanical and electrical connector 11 of the capacitive electric energy storage 102 is connected with a mechanical and electrical connector 13 of the adapter 116. The electric power may be fed from the capacitive electric energy storage 102 to the handheld communication unit 106 when the capacitive electric energy storage 102 and the handheld communication unit 106 are connected with each other, directly or through the adapter 116. The connection may be based on a bayonet connector mechanism, for example.

The handheld communication unit 106 is configured to be in an electric contact with the capacitive electric energy storage 102 of the communication apparatus 100 particularly at moments when electric power is not fed or available to the communication unit 106 from any other source. Typically, the handheld communication unit 106 and the capacitive electric energy storage 102 are constantly in electric connection with each other. The electric connection means a wired connection. The wired connection can be considered a galvanic connection. In an embodiment, they are integrated together. In an embodiment, they are confined within a common case.

The handheld communication unit 106 is configured to have a wireless connection to a network 150 of a radio system. The communication unit 106 may transmit and receive voice which can be considered to correspond to the operation of a mobile phone. Additionally or alternatively, the communication unit 106 may transmit and receive data which can be considered to correspond to operation of a smart phone or a computer such as a portable personal computer. The signals transmitted and received may be digital. In an embodiment, the communication apparatus 100 may be software defined.

The software-defined handheld communication unit 106 has analog hardware replaced by software. The analog hardware refers to mixer(s) and/or modulator(s), for example. That is, instead of performing analog signal processing, signals are processed digitally under control of computer program(s). It typically takes too many seconds to minutes for the software-defined handheld communication unit 106 to become fully operable from the moment of switch-on of the operational electric power. The period between the switch-on and the full operation depends on the requirements defined in the computer program(s) of the software.

Figure 4 illustrates an example where the capacitive electric energy storage 102 feeds energy to the handheld communication unit 106. That can be done when the battery 112 is exchanged to a new one or when the battery 112 is exchanged to one of the external electric power sources 114(1) to 114(N). Naturally, one of the external electric power sources 114(1) to 114(N) may be swapped to the battery 112. The coupling between the capacitive electric energy storage 102 and the source adapter 104 or the battery 112 may be wired using a wire 108 and its connector 110 instead of a direct coupling using connectors 14 and 15 or 14 and 16.

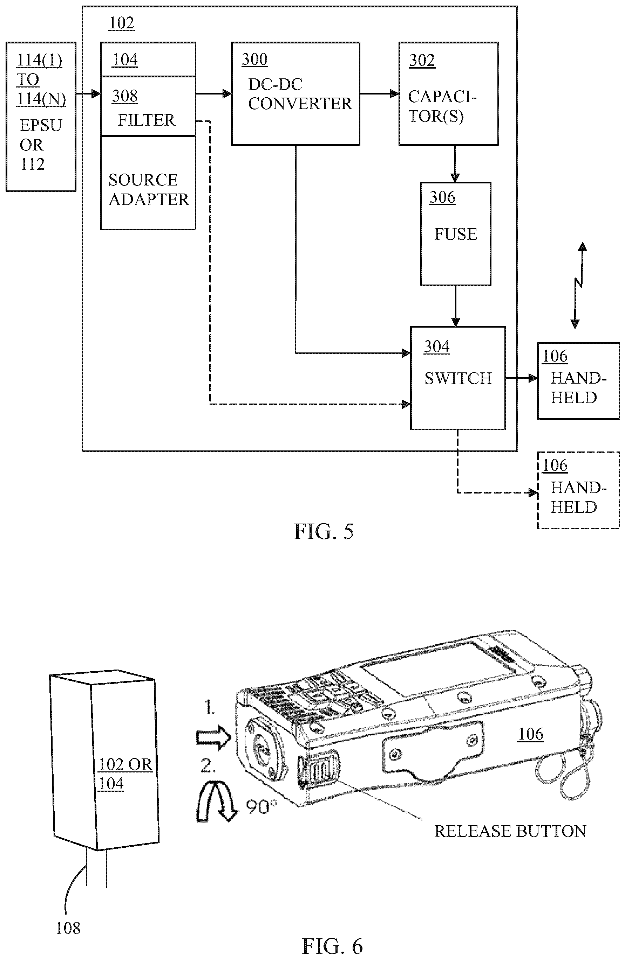

As shown in Fig. 5, the capacitive electric energy storage 102, which comprises at least one capacitor 302. The at least one capacitor 302 has a predetermined charge capacity required for a predetermined interval of operation of the handheld communication unit 106. The at least one capacitor 302 is configured to receive electric power through a source adapter 104. Because it is known what kind of device the handheld communication unit 102 is, a person skilled in the art can easily determine its energy consumption as a function of time in various conditions, and hence the predetermined charge capacity can correspondingly easily be determined. The source adapter 104 may be mechanically and electrically connected with the capacitive electric energy storage 102. The source adapter 104 may, in turn, be connected with the battery 112 or one of the external electric power sources 114(1) to 114(N). The connection may be based on a bayonet connection mechanism. The source adapter 104 may comprise a battery eliminator.

The handheld communication unit 106 is electrically connected with either the battery 112 or the external electric power sources 114(1) to 114(N) alternative. The connection between the handheld communication unit 106 and the battery 112 or the handheld communication unit 106 and one of the external electric power sources 114(1) to 114(N) is temporary. The connection is swapped and performed in a repeated manner. That may also mean, the handheld communication unit 106 is or may be electrically connected with the source adapter 104 temporarily in a repeated manner. The battery 112 may be directly connected with the capacitive electric energy storage 102 or through the source adapter 104.

The word "temporarily" means that the handheld communication unit 106 has not all the time an electric connection with any of the source adapter 104, the external electric power sources 114(1) to 114(N) and the battery 112 alone. During one period, the handheld communication unit 106 is connected with the battery 112. During another period, the handheld communication unit 106 is connected with one of the external electric power sources 114(1) to 114(N). During still another period the handheld communication unit 106 is connected with another of the external electric power sources 114(1) to 114(N) and so on.

The source adapter 104 may comprise a connector wire 108 which comprises a connector 110 configured to be in an electrical connection a plurality of external electric power sources 114(1) to 114(N) by connecting the connector 110 with connectors 18 of the external electric power sources 114(1) to 114(N). The connector 110 is repeatedly connectable with each of the connectors 18 of the plurality of different external electric power sources 114(1) to 114(N). Different external electric power sources 114(1) to 114(N) may be connected with the connector 110 at different periods.

The capacitive electric energy storage 102 is charged in response to the electric connection with said one of the electric power sources 114(1) to 114(N) through the source adapter 104, or in response to the electric connection with the electric connection with the battery 112. The capacitive electric energy storage 102 is connected with the electric power sources 114(1) to 114(N) and the battery 112 in different periods.

The capacitive energy storage 102 supplies operational electric power to the handheld communication unit 106 for the predetermined interval of operation in response to a loss of electric power from the external power sources 114(1) to 114(N) and the battery 112. The electric power loss may mean that the external power sources 114(1) to 114(N) and the battery 112 are drained or an electric connection with them is lost.

The handheld communication unit 106 retains memory and clock functions and reserves connection to the network 150 of the radio system during said interval based on electric power supply from the capacitive energy storage 102.

In an embodiment, the operation of the handheld communication unit 106, which the capacitive electric energy storage 102 may keep functional, may relate to certain memory operations. In an embodiment, that may refer to holding data available in volatile memory of the handheld communication unit 106 by feeding electric power to the volatile memory. Volatile memory normally holds only temporarily data that is processed or utilized by the handheld communication unit 106. Volatile memory requires a continuous power supply in order to maintain the data available. In this embodiment, the handheld communication unit 106 may be prevented from receiving and transmitting wireless signals. Instead, important data for being quickly operable can be kept in the volatile memory. Namely, any one of loading operational system, system configuration and authentication alone or in some combination in a startup phase of the handheld communication unit 106 may take much longer if the data relating to them is not preserved in the volatile memory.

In an embodiment, electric power from the capacitive electric energy storage 102 may keep bootloader alive, active, in operation or in standby during the predetermined interval of operation related to the loss of electric power from the battery 112 and the external electric power sources 114(1) to 114(N).

In an embodiment, electric power from the capacitive electric energy storage 102 may keep operational system operable in the handheld communication unit 106 during the predetermined interval of operation related to the loss of electric power from the battery 112 and the external electric power sources 114(1) to 114(N). In an embodiment, the interval may be tens of seconds. In an embodiment, the interval may last for minutes.

In an embodiment, the capacitive electric energy storage 102 may keep the handheld communication unit 106 control signaling active with the wireless network 150 during the predetermined interval of operation related to the loss of electric power from the battery 112 and the external electric power sources 114(1) to 114(N). In this embodiment, the payload traffic is not necessarily available.

In an embodiment, the capacitive electric energy storage 102 may keep the handheld communication unit 106 fully operable with the wireless network 150 during the predetermined interval of operation related to the loss of electric power from the battery 112 and the external electric power sources 114(1) to 114(N). In this manner, both the control signaling and the payload traffic may operate normally as if no power source loss is experienced at all. That means the exchange of the battery 112 and/or the external electric power sources 114(1) to 114(N) can be performed with no operational restrictions.

In an embodiment, the capacitive energy storage 102 may supply operational electric power to the handheld communication unit 106 for the predetermined interval of operation in response to the loss electric power from the external power sources 114(1) to 114(N) and the battery 112 caused by at least one of the following: loss of charge, a battery change, external power source change, desired or undesired disconnection with the battery 112 and the external power sources 114(1) to 114(N).

In an embodiment, the battery 112 may be one of the external power sources 114(1) to 114(N).

In an embodiment an example of which is illustrated in Fig. 5, the communication apparatus 100 may comprise a DC-DC-converter (Direct-Current-Direct Current converter) 300 included in one of the following: the source adapter 104 and the capacitive electric energy storage 102. The DC-DC converter 300 may convert different voltages of the plurality of the external electric power sources 114(1) to 114(N) and the battery 112 into an operational voltage level suitable for the handheld communication unit 106. The DC-DC converter 300 may supply the operational voltage to the handheld communication unit 106 and charge the capacitive electric energy storage 102 with said voltage in response to electric connection with any of the external electric power sources 114(1) to 114(N) or the battery 112.

In an embodiment, the DC-DC converter 300 may limit the operational voltage at or below voltage of an external electric power source of the external power source 114(1) to 114(N) or the battery 112 which is electrically connected with the DC-DC converter 300. The utilization of the DC-DC converter 300 enables averaging of the bursts of electric power that are consumed. That allows determination of maximum electric current and/or power that is required from the output of an electric power source feeding electric power to one or more handheld communication units 106. Namely instead of one handheld communication unit 106, two or more handheld communication units 106 may be connected with the capacitive electric energy storage 102 or in general to the same electric power source such as the battery 112 or external electric power sources114(1) to 114(N).

In an embodiment an example of which is illustrated in Fig. 5, the source adapter 104 may comprise an electric and/or magnetic disturbance filter 308 that protects the capacitive electric energy storage 102 and the handheld communication unit 106 from electrostatic discharge and electromagnetic interference.

In an embodiment an example of which is illustrated in Fig. 5, the capacitive energy storage 102 may comprise at least one capacitor 302 and a switch 304. The switch 304 detects connection with at least one of the external power sources 114(1) to 1148(N) and the battery 112. Then the switch 304 connects the at least one of the external power sources 114(1) to 114(N) and the battery 112 with the handheld communication device 106. The switch 304 further detects the loss of electric power from the external power sources 114(1) to 1148(N) and the battery 112. Still further, the switch 304 connects automatically the at least one capacitor 302 with the handheld communication unit 106 for supplying electric power from the at least one capacitor 302 to the handheld communication unit 106. A person skilled in the art is familiar with detection of the loss of operational voltage, *per se.*

Note that in some cases the DC-DC converter 300 may be bypassed. Then the switch 304 may choose a direct route from the filter 308, which receives electric power from the battery 112 or the external power sources 114(1), to 114(N) to the handheld communication unit 106.

In an embodiment, the capacitor(s) 302 of the capacitive electric energy storage 102 may comprise one or more so called supercapacitors. The supercapacitors include electric double-layer capacitors (EDLCs), electrochemical capacitors, electrochemical supercapacitors, and ultracapacitors. A person skilled in the art is familiar with capacitors, *per se.* A person skilled in the art is familiar with the difference between the capacitors and batteries, the batteries storing electric energy chemically.

A supercapacitor is operative at least down to -40°C whereas operation of a battery is essentially impaired already at -20°C. Although batteries have high energy density they are slower than supercapacitors at starting to feed electric power which has a technical effect when the electric power source must be quickly changed. Supercapacitors can feed electric power to the handheld communication unit 106 practically immediately in response to a sudden cut of electric power feed from the battery 112 or the external electric power source 114(1) to 114(N) which is a technical advantage with respect to batteries which are much slower, the slowness being hazardous to the operation of the handheld communication unit 102. In that manner, the immediate response can be considered to correspond to no cut of energy feed at all, in practice.

The capacitor(s) 302 of the capacitive electric energy storage 102 averages the electric power consumption of the handheld communication unit 106 which removes the electric power peaks. That also makes the maximum electric power of the tactical power pack (battery 112) suffice when it is used.

In general, the capacitive energy storage 102 forms a buffer where the capacitors are both charged and discharged continuously. Batteries as electrochemical storages would be technically complicated and/or unsuitable for the purpose.

In an example illustrated in Fig. 6, the capacitive energy storage 102 and the handheld communication unit 106 may be connected with a quick and releasable connector arrangement. The connection may be similar to a bayonet connection mechanism, for example. A 90° turn of the connectors or the like may attach the capacitive energy storage 102 and the handheld communication unit 106 together. The capacitive energy storage 102 and the handheld communication unit 106 may be released from each other by pressing or moving a release button.

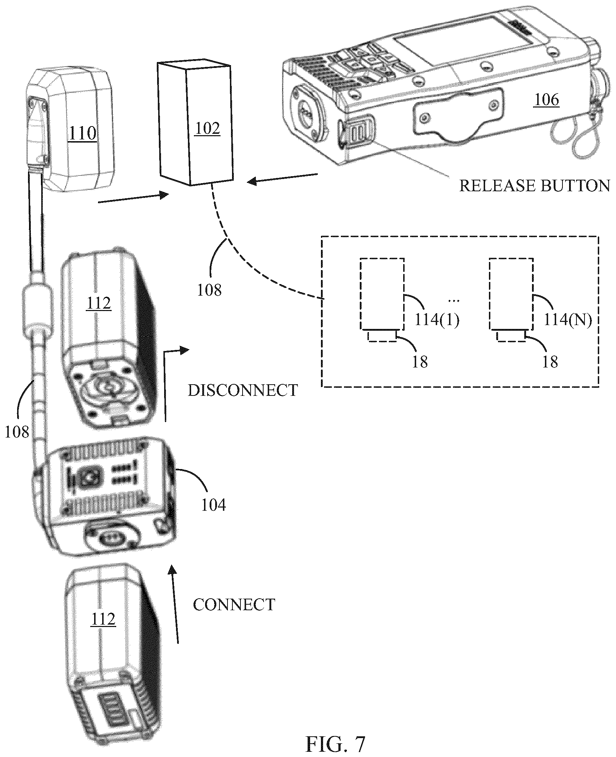

In an example illustrated in Fig. 7, the handheld communication unit 106, the capacitive energy storage 102 and the source adapter 104 that is connected with at least one battery 112 can be attached together. In this example, the connector wire 108 may connect capacitive energy storage 102 and the tactical power pack i.e. the source adapter 104 that may include replaceable batteries 112 i.e. batteries 112 may be repeatably connected and disconnected with the connectors of the source adapter 104. The one or more batteries 112 may be hot swap batteries. Alternatively or additionally, the connector wire 108 may connect the capacitive energy storage 102 and one or more external electric power sources 114(1) to 114(N). The handheld communication unit 106, the capacitive energy storage 102 and the battery 112 can be repeatedly attached together and detached from each other. The connection between the capacitive energy storage 102 and connector 15 of wire 108 of the source adapter 104 may be similar to the bayonet connection mechanism, for example. The connection between the handheld communication unit 106 and the capacitive energy storage 102 may be similar to a bayonet connection mechanism, for example.

Note that the combination of the handheld communication unit 106 and the capacitive energy storage 102 is also a handheld device or a portable device. Additionally, the combination of the handheld communication unit 106, the capacitive energy storage 102 and the battery 112 is a handheld device or a portable device. Still further, the combination of the handheld communication unit 106, the capacitive energy storage 102 and the source adapter 104 is a handheld device or a portable device.

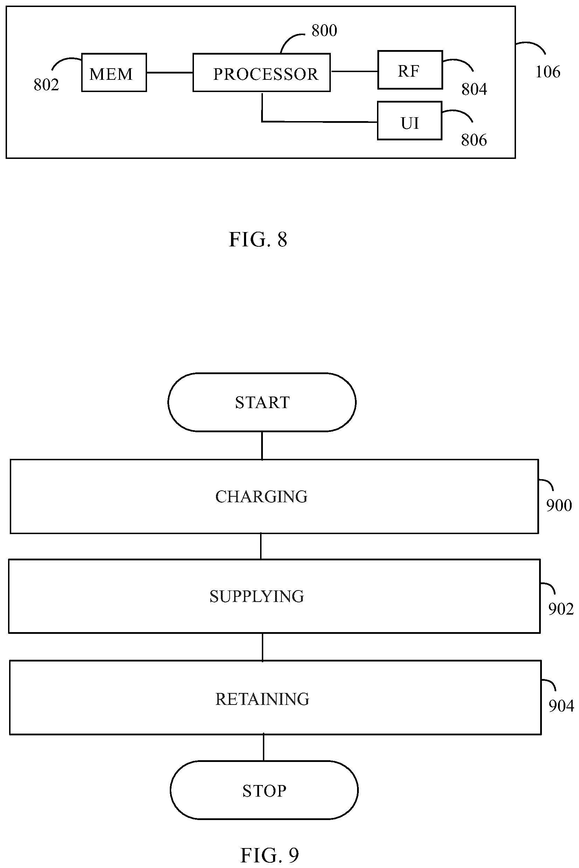

Fig. 8 illustrates the handheld communication unit 106, which comprises data processing unit 800, one or more memories 802, radio frequence part 804 and an interface 806. The data processing unit 800 comprises one or more processors. The one or more memories 802 may comprise data for the operation and a computer program for performing operations of the handheld communication unit 106. The radio frequency part 804 comprises a mixer for performing up- and down-conversion analogically or digitally. The transmitted data and/or voice is mixed to a carrier of radio frequency. The received radio frequency signal is down-converted to a signal of intermediate frequency. The user interface 806 is used for inputting data to the handheld communication unit 106 and outputting data from the handheld communication unit 106. A person skilled in the art is familiar with the data processing unit 800, the one or more memories 802, the radio frequence part 804 and the interface 806, *perse.*

The term "computer" includes a computational device that performs logical and arithmetic operations. For example, a "computer" may comprise an electronic computational device, such as an integrated circuit, a microprocessor, a mobile computing device. A "computer" may comprise a central processing unit, an ALU (arithmetic logic unit), a memory unit, and a control unit that controls actions of other components of the computer so that steps of a computer program are executed in a desired sequence. A "computer" may also include at least one peripheral unit that may include an auxiliary memory (such as a disk drive or flash memory), and/or may include data processing circuitry.

A user interface 806 means an input/output device and/or unit. Nonlimiting examples of a user interface include a touch screen, other electronic display screen, keyboard, mouse, microphone, handheld electronic controller, digital stylus, display screen, speaker, and/or projector for projecting a visual display.

At first, the handheld communication unit 106 may be coupled with a battery of a vehicle that is an external electric power source 114(1). That is practical when a person is travelling from a place to another place by car, for example. In such a case, the handheld communication unit 106 is coupled with a source adapter 104, which may be called an eliminator or a battery eliminator, and the source adapter 104 is coupled with the battery (power source 114(1)) of the vehicle (see Fig. 2). When the person wants to leave the vehicle with the handheld communication unit 106, he/she must swap the external electric power source 114(1) to the battery 112 of the handheld communication unit 106. The swap typically causes the handheld communication unit 106 to switch off. In a case of a military operation, the swap from the vehicle battery 114(1) to the battery 112 of the handheld communication unit 106 means that the soldier connects the handheld communication unit 106 with his/her tactical power pack that is a field proven wearable battery solution for mobile troops and dismounted soldiers. The handheld communication unit 106 may be considered a tactical radio for dismounted soldiers.

When the power sources are swapped, the tactical radio typically switches off during the swap which is highly undesirable in many situations, often life threatening, for military troops, fire fighters, police and/or medical personnel, for example. The switch-on and a new connection between the handheld communication unit 106 and the network 150 after the swap may take undesirable long. The time it takes may be minutes. Sometimes it may take about 5 min to about 10 min for example. In a potentially life-threatening situation such a cut in communication may be experienced to continue too long irrespective of its actual length, and shortening it is desirable. In a combat situation the discontinuation of the operation of the handheld communication unit 106 and/or the connection with the network 150 may be a particular nuisance. When the person returns to the vehicle, a corresponding swap can be performed. With the capacitive energy storage 102 the operation of the handheld communication unit 106 can continue without cuts during swaps and other cuts of electric energy from the battery 112, the external electric power source 114(1) to 114(N) and/or any other potential electric power source.

Traditionally, individual teams, squads and platoons in the field rely on radio communications to contact headquarters, receive orders and get notified of allied actions and enemy movements. The capacitive energy storage 102 enables continuous communication or communication with only cuts lasting the time it takes to make the swap mechanically. That typically means only a couple of seconds or less. It usually is experienced as a tolerable and at least almost unnoticible cut in operation of the handheld communication unit 106.

Figure 9 is a flow chart of the operation method. In step 900, the capacitive electric energy storage 102 is charged when the capacitive electric energy storage 102 has an electric connection with said one of the electric power sources 114(1) to 114(N) through the source adapter 104, or with the electric connection with the battery 112.

In step 902, operational electric power is supplied to the handheld communication unit 106 for the predetermined interval of operation by the capacitive energy storage 102 in response to a loss of electric power from the external power sources 114(1) to 114(N) and the battery 112.

In step 904, memory and clock functions retained and connection to the network 150 of the radio system is reserved during said interval based on electric power supply from the capacitive energy storage 102.

The method shown in Figure 9 may be implemented as a logic circuit solution or computer program. The computer program may be placed on a computer program distribution means for the distribution thereof. The computer program distribution means is readable by a data processing device, and it encodes the computer program commands, carries out the operations of the handheld communication unit 106.

It will be obvious to a person skilled in the art that, as technology advances, the inventive concept can be implemented in various ways. The invention and its embodiments are not limited to the example embodiments described above but may vary within the scope of the claims.

## Claims

1. A communication apparatus, **characterized in that** the communication apparatus (100) comprises a handheld communication unit (106), which is configured to be in an electric contact with a capacitive electric energy storage (102) of the communication apparatus (100), the handheld communication unit (106) being configured to have a wireless connection to a network (150) of a radio system;
the capacitive electric energy storage (102), which comprises at least one capacitor (302) with predetermined charge capacity required for a predetermined interval of operation of the handheld communication unit (106), is configured to be in an electric contact with a source adapter (104) and/or a battery (112) of the handheld communication unit (106) temporarily in a repeated manner, and
the source adapter (104) and/or the capacitive electric energy storage (102) comprises a connector wire (108) which comprises a connector (110) configured to be repeatedly connectable with two of the plurality of different external electric power sources (114(1) to 114(N)) and the battery (112);
the capacitive electric energy storage (102) is configured charge in response to the electric connection with said one of the electric power sources (114(1) to 114(N)) through the source adapter (104), or in response to the electric connection with the electric connection with the battery (112); and
the capacitive energy storage (102) is configured to supply operational electric power to the handheld communication unit (106) for the predetermined interval of operation in response to a loss of electric power from the external power sources (114(1) to 1148(N)) and the battery (112); and
the handheld communication unit (106) is configured to retain memory and clock functions and reserve connection to the network (150) of the radio system during said interval based on electric power supply from the capacitive energy storage (102).

2. The apparatus of claim 1, **characterized in that** the capacitive energy storage (102) is configured to supply operational electric power to the handheld communication unit (106) for the predetermined interval of operation in response to the loss of electric power from the external power sources (114(1) to 114(N)) and the battery (112) caused by at least one of the following: a battery change, external power source change, desired or undesired disconnection with the battery (112) and the external power sources (114(1) to 114(N)).

3. The apparatus of claim 1, **characterized in that** the handheld communication unit (106) is software defined.

4. The apparatus of claim 1, **characterized in that** the battery (112) is one of the external power sources (114(1) to 114(N)).

5. The apparatus of claim 1, **characterized in that** the communication apparatus (100) comprises a direct-current-direct current converter (300) included in one of the following: the source adapter (104) and the capacitive electric energy storage (102), and the direct-current-direct-current converter (300) is configured to convert different voltages of the plurality of the external electric power sources (114(1) to 114(N)) into operational voltage level suitable for the handheld communication unit (106), and the direct-current-direct-current converter (300) is configured to supply the operational voltage to the handheld communication unit (106) and charge the capacitive electric energy storage (102) with said voltage level in response to electric connection with any of the external electric power sources (114(1) to 114(N)).

6. The apparatus of claim 1, **characterized in that** the direct-current-direct-current converter (300) is configured to limit the operational voltage level at or below voltage of an external electric power source of the external power source (114(1) to 114(N)) or the battery (112) which is electrically connected with the direct-current-direct-current converter (300).

7. The apparatus of claim 1, **characterized in that** the source adapter (104) comprises an electric and/or magnetic disturbance filter (308) that is configured to protect the capacitive electric energy storage (102) and the handheld communication unit (106) from electrostatic discharge and electromagnetic interference.

8. The apparatus of claim 1, **characterized in that** the capacitive energy storage (102) comprises a switch (304), the switch (304) being configured to detect connection with at least one of the external power sources (114(1) to 1148(N)) and the battery (112), connect one of the external power sources (114(1) to 1148(N)) and the battery (112) with the handheld communication device (106), detect the loss of electric power from the external power sources (114(1) to 1148(N)) and the battery (112), and connect automatically the at least one capacitor (302) with the handheld communication unit (106) for supplying electric power from the at least one capacitor (302) to the handheld communication unit (106).

9. The apparatus of claim 1, **characterized in that** the source adapter (104) is configured to receive different voltage levels from the plurality of external electric power sources (114(1) to 114(N)).

10. The apparatus of claim 1, **characterized in that** the handheld communication unit (106) is configured keep control and payload traffic with to the network (150).

11. An operation method, **characterized in that** the communication apparatus (100) comprises a handheld communication unit (106), which is configured to be in an electric contact with a capacitive electric energy storage (102) of the communication apparatus (100), the handheld communication unit (106) being configured to have a wireless connection to a network (150) of a radio system;
the capacitive electric energy storage (102), which comprises at least one capacitor (302) with predetermined charge capacity required for a predetermined interval of operation of the handheld communication unit (106), is configured to be in an electric contact with a source adapter (104) and/or a battery (112) of the handheld communication unit (106) temporarily in a repeated manner, and
the source adapter (104) and/or the capacitive electric energy storage (102) comprises a connector wire (108) which comprises a connector (110) configured to be in electrical connection with one external electric power source of a plurality of external electric power sources (114(1) to 114(N)), and the connector (110) being repeatedly connectable with two of the plurality of different external electric power sources (114(1) to 114(N)) and the battery (112) one at a time; and
charging (900) the capacitive electric energy storage (102) when the capacitive electric energy storage (102) has an electric connection with said one of the electric power sources (114(1) to 114(N)) through the source adapter (104), or with the electric connection with the battery (112);
supplying (902), by the capacitive energy storage (102), operational electric power to the handheld communication unit (106) for the predetermined interval of operation in response to a loss of electric power from the external power sources (114(1) to 1148(N)) and the battery (112); and
retaining (904), by the handheld communication unit (106), memory and clock functions and reserving connection to the network (150) of the radio system during said interval based on electric power supply from the capacitive energy storage (102).
